# EUROPEAN PATENT APPLICATION

(11) **EP 4 651 312 A1**
(43) Date of publication of application: **19.11.2025**
(21) Application number: 24741337.0
(22) Date of filing: 11.01.2024
(51) Int. Cl.: H01R 13/40, B60L 53/16

(54) **LIQUID COOLED CONNECTOR**

(30) Priority: 13.01.2023 CN 202320081215 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2024/071881
(87) International publication number: WO 2024/149341

(57) **Abstract**

Disclosed in the present disclosure is a liquid cooled connector, including a housing, at least two terminals disposed side by side in the housing, a liquid cooling member provided between the two terminals, and an insulation member provided between each terminal and the liquid cooling member. The liquid cooling member includes a liquid cooling box extending along an arrangement direction of the terminals. The terminals located at two ends of the liquid cooling box are each provided with a positioning cavity having an opening on one side. The two ends of the liquid cooling box are respectively inserted into the positioning cavities and abutted against bottom walls of the positioning cavities opposite to the openings so as to be fixed. In the liquid cooled connector according to the present disclosure, coolant circulates in the liquid cooling member, and by means of the circulating flow of the coolant, a large amount of heat generated by the terminals sleeved on the liquid cooling member is taken away during charging of an electric apparatus such as an electric vehicle, so as to reduce the temperatures of the terminals during operation, thereby improving the charging efficiency, shortening the charging time and reducing the damage to the connector.

## Description

### RELATED APPLICATION

The present disclosure claims priority to Chinese Patent Application No. 202320081215.5 filed on January 13, 2023, which is hereby incorporated by reference in its entirety.

### TECHNICAL FIELD

The present disclosure relates to the field of charging technologies, and particularly to a liquid cooled connector.

### BACKGROUND

With the popularization of new energy electric vehicles, the development of DC fast charging technology has become increasingly important. As an important component, DC connectors have seen many mature products in the market. In order to improve the charging speed, shorten the charging time and enhance the user experience, the charging current and power of the DC connectors for loads are bound to become larger and larger.

During high-current charging of an electric vehicle, a large amount of heat is generated at connection points between a cable and first and second charging terminals, as well as between the cable and an external power source. This leads to a rise in temperature, thus reducing the charging efficiency. Moreover, a high temperature causes significant damage to the connector, and an excessively high temperature may even cause fire hazards.

### SUMMARY

The present disclosure aims to provide a new technical solution of a liquid cooled connector.

According to a first aspect of the present disclosure, there is provided a liquid cooled connector, including a housing, at least two terminals disposed side by side in the housing, a liquid cooling member provided between the two terminals, and an insulation member provided between each terminal and the liquid cooling member. The liquid cooling member includes a liquid cooling box extending along an arrangement direction of the terminals, and the terminals located at two ends of the liquid cooling box are each provided with a positioning cavity having an opening on one side. The two ends of the liquid cooling box are respectively inserted into the positioning cavities and abutted against bottom walls of the positioning cavities opposite to the openings so as to be fixed.

Optionally, each of the insulation members includes an accommodating cavity having an opening on one side, an inner surface of the accommodating cavity is matched and mounted with an outer surface of an end of the liquid cooling box, and an outer surface of the accommodating cavity is matched and mounted with an inner surface of the positioning cavity.

Optionally, the insulation member further includes a blocking portion, which extends outwards from an opening end of the accommodating cavity and is attached to an end face where the opening of the positioning cavity is located.

Optionally, at least one additional terminal is further provided between the terminals located at the two ends of the liquid cooling box, the additional terminal includes a through connection cavity, and an additional insulation member is provided between the connection cavity and the liquid cooling box.

Optionally, the additional insulation member includes a through additional accommodating cavity, and at least one opening end of the additional accommodating cavity is provided with a blocking portion extending outwardly, so that at least one blocking portion is present between adjacent terminals.

Optionally, the liquid cooling box is made of a high thermal conductivity material, and the insulation member is made of a thermally conductive insulation material.

Optionally, the liquid cooling box is provided with at least one liquid inlet and at least one liquid outlet.

Optionally, the liquid cooling box includes a liquid storage shell that has an opening on a side facing a cable, and a cover that covers the opening. The liquid inlet and the liquid outlet are provided on the cover.

Optionally, the cover is integrally formed with the liquid storage shell, or the cover is detachably connected to the liquid storage shell.

Optionally, the liquid storage shell is internally provided with a cross-shaped partition plate, which is located at a center of the liquid cooling box in the arrangement direction to divide the liquid cooling box into two groups of liquid cooling cavities which are mirror images of each other. Each of the liquid cooling cavities includes a first liquid cooling cavity, a second liquid cooling cavity and a communication cavity communicating the first liquid cooling cavity with the second liquid cooling cavity. The first liquid cooling cavity is communicated with one of the liquid inlet and the liquid outlet, and the second liquid cooling cavity is communicated with the other of the liquid inlet and the liquid outlet.

Optionally, the first liquid cooling cavities are communicated with the liquid inlets, and each of the first liquid cooling cavities is provided with an arc-shaped guide plate extending along an extension direction of the terminal. A gap is formed between the arc-shaped guide plate and an inner surface of the cover. A gap is formed between the arc-shaped guide plate and a sidewall of the liquid storage shell opposite to the cover.

Optionally, the arc-shaped guide plate includes a first end and a second end opposite to the first end, and the first end is closer to the center than the second end.

Optionally, the first end includes a first guide surface and a second guide surface, which are opposite to each other and intersect at a tip of the first end.

Optionally, the liquid cooled connector further includes a liquid leakage detection device disposed in a detection control loop. The liquid leakage detection device includes two conductive elements located below the liquid cooling member, with a gap formed between the two conductive elements. When liquid leaks from the liquid cooling member, the gap is filled with the liquid to switch the detection control loop from an open state to a closed state to trigger the liquid leakage detection device to transmit a leakage signal.

Optionally, the two conductive elements are configured as two arc-shaped plates symmetrically arranged with respect to the gap, and the two arc-shaped plates enclose a liquid receiving area (i.e., an area that receives the coolant leaked from the liquid cooling member), with the gap being located at a lowest part of the liquid receiving area.

The liquid cooled connector according to the present disclosure achieves the following advantageous effects.
1. The circulation of coolant in the liquid cooling member takes away a large amount of heat generated by the terminals, which are sleeved on the liquid cooling member, during charging of an electric apparatus such as an electric vehicle. This reduces the temperatures of the terminals during operation, thereby improving the charging efficiency, shortening the charging time and reducing the damage to the connector.
2. Since the accommodating cavity of the insulation member is matched and mounted between the positioning cavity of the terminal and the liquid cooling member, an inner surface of the accommodating cavity is closely attached to an outer surface of an end of the liquid cooling member, and an outer surface of the accommodating cavity is closely attached to an inner surface of the positioning cavity, so that the liquid cooling member is tightly mounted in the positioning cavity of the terminal, and the heat generated during charging of the terminal is quickly taken away by the coolant circulating in the liquid cooling member, thereby improving the charging efficiency, shortening the charging time and reducing the damage to the connector.
3. Since the additional insulation member different from the insulation member is provided on the liquid cooling member, and the additional terminal is provided on the additional insulation member, the additional terminal is insulated from the terminals at the two ends by the blocking portion of the insulation member, allowing different types of wires to be connected to the terminals that are insulated from each other.
4. Since the blocking portion is provided on the additional insulation member, the adjacent terminals are insulated from each other and may be connected to the same type of wires. It can be understood that various types of terminals for charging an electric apparatus are defined as a charging device, and a plurality of terminals in the same charging device may be connected to a same positive wire or a same negative wire for use as a positive terminal or a negative terminal. Alternatively, the plurality of terminals are connected to a plurality of positive wires or a plurality of negative wires for use as positive terminals or negative terminals. Alternatively, the plurality of terminals are connected to a plurality of wires, with each wire designated as a positive or a negative according to requirements.
5. The terminals provided on the liquid cooling member are insulated from each other, one liquid cooling member may include a plurality of charging devices, and the positive terminal and the negative terminal in the same charging device are disposed adjacent to each other. In this case, one liquid cooled connector can charge a plurality of electric apparatuses, or one electric apparatus including a plurality of charging circuits. The electric apparatus may be but not limited to a chargeable vehicle.
6. Since the liquid leakage detection device is provided in the connector, it is possible to discover the damage of the liquid cooling member, and prevent the positive terminal and the negative terminal from being electrically connected. This protects both the connector and the electric apparatus being charged by the connector, while also avoiding fires and personal injury.

Other features and advantages of the present disclosure will be clearer from the following detailed description of the exemplary embodiments of the present disclosure with reference to the drawings.

### BRIEF DESCRIPTION OF THE DRAWINGS

The drawings, which are incorporated in and constitute a part of the specification, illustrate embodiments of the present disclosure and together with the description, serve to explain the principles of the present disclosure.
FIG. 1 illustrates a structural diagram of a liquid cooled connector according to the present disclosure;
FIG. 2 illustrates an exploded view of a liquid cooled connector according to the present disclosure;
FIG. 3 illustrates a structural diagram of a terminal located at each end of a liquid cooled connector according to the present disclosure;
FIG. 4 illustrates a structural diagram of a liquid cooled connector according to the present disclosure, in which a liquid cooling component, terminals and additional terminals are assembled.
FIG. 5 illustrates a structural diagram of a liquid cooled connector according to the present disclosure, in which a liquid cooling component, terminals and additional terminals are disassembled;
FIG. 6 illustrates a structure diagram of a liquid cooled connector according to the present disclosure, in which a liquid storage cavity and a cover in a liquid cooling component are disassembled;
FIG. 7 illustrates a structural diagram of a liquid storage cavity in a liquid cooling member of a liquid cooled connector according to the present disclosure; and
FIG. 8 illustrates a structural diagram of a liquid storage cavity without a top wall in a liquid cooling member of a liquid cooled connector according to the present disclosure.

Reference numerals:
1: housing; 2: terminal; 21: positioning cavity; 211: bottom wall; 22: fixing portion; 23: connection cavity; 24: cable connection portion; 3: liquid cooling member; 31: liquid cooling box; 32: liquid inlet; 33: liquid outlet; 34: liquid cooling cavity; 35: liquid inlet pipe; 36: liquid outlet pipe; 311: liquid storage shell; 312: cover; 313: cross-shaped partition plate; 314: vertical plate; 315: transverse plate; 316: connection area inner surface; 341: first liquid cooling cavity; 342: second liquid cooling cavity; 343: communication cavity; 3411: diversion area; 3412: confluence area; 3413: inner liquid flow area; 3414: outer liquid flow area; 41: insulation member; 411: accommodating cavity; 42: blocking portion; 43: additional insulation member; 431: additional accommodating cavity; 7: arc-shaped plate; 71: first end; 72: second end; 73: first guide surface; 74: second guide surface; 8: liquid leakage detection device; 81:conductive element; 82: gap.

### DETAILED DESCRIPTION OF THE EMBODIMENTS

Various exemplary embodiments of the present disclosure will now be described in detail with reference to the drawings. It should be noted that relative arrangements of components and steps, numerical expressions, and values set forth in these embodiments do not limit the scope of the present disclosure unless specifically stated otherwise.

The following description of at least one exemplary embodiment is illustrative only and in no way serves as any limitation to the present disclosure and its applications or uses.

Technologies, methods, and devices known to those of ordinary skill in the related art may not be discussed in detail, but where appropriate, such technologies, methods, and devices should be considered as part of the specification.

In all examples illustrated and discussed herein, any specific value should be construed as merely exemplary and not as a limitation. Therefore, other examples of the exemplary embodiments may have different values.

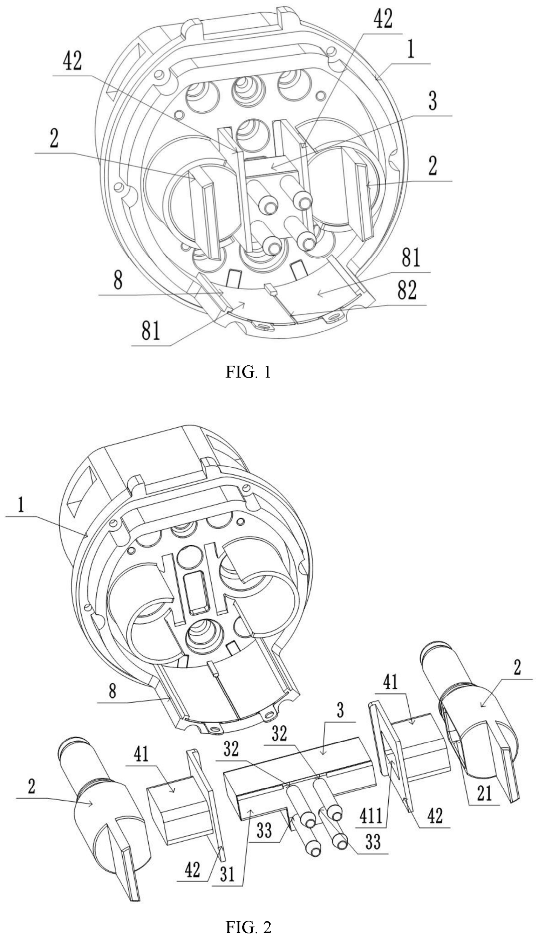

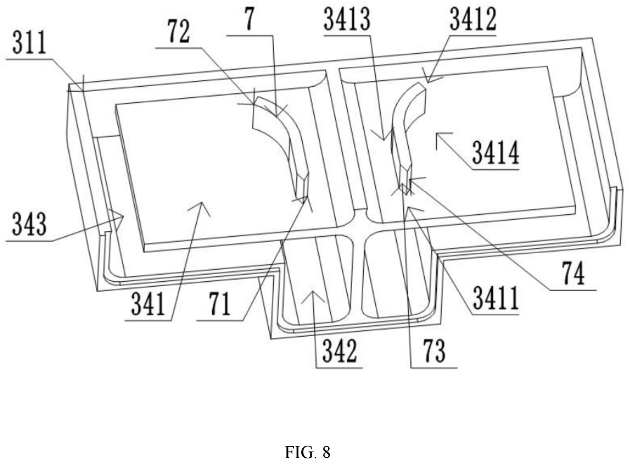

As illustrated in FIGS. 1 to 8, a liquid cooled connector according to the present disclosure includes a housing 1, at least two terminals 2 disposed side by side in the housing 1, a liquid cooling member 3 provided between the two terminals 2, and an insulation member 41 provided between each terminal 2 and the liquid cooling member 3.

The liquid cooling member 3 has a liquid cooling box body 31 extending along an arrangement direction of the terminals 2. The terminals 2 located at two ends of the liquid cooling box 31 are each provided with a positioning cavity 21 having an opening on one side. The two ends of the liquid cooling box 31 are respectively inserted into the positioning cavities 21 and abutted against bottom walls 211 of the positioning cavities 21 opposite to the openings so as to be fixed.

Coolant circulates in the liquid cooling member 3 on which the terminals 2 are sleeved. The circulating flow of the coolant takes away a large amount of heat generated by the terminals 2 during charging of an electric apparatus such as an electric vehicle, so as to reduce the temperatures of the terminals 2 during operation, thereby improving the charging efficiency, shortening the charging time and reducing the damage to the connector.

Each of the terminals 2 sequentially includes a fixing portion 22 fixedly assembled with the housing 1, a positioning cavity 21 connected to the liquid cooling member 3, and a cable connection portion 24 connected to a cable. A free end side of the fixing portion 22 is connected to a mating terminal. Since the positioning cavity 21 has an opening on one end, a bottom wall 211 and an inner peripheral wall, the positioning cavity 21 and the inner peripheral wall can contact the insulation member 41 to the greatest extent, and the insulation member 41 contacts the liquid cooling member 3 to the greatest extent, so that the high temperature generated in a charging process of the terminal 2 can be taken away in the shortest time by the coolant circulating in the liquid cooling member 3.

Since the terminals 2 are provided at the two ends of the liquid cooling member 3, and the positioning cavities 21 of the terminals 2 at the two ends are connected to the ends of the liquid cooling member 3, the terminals 2 at the two ends can be restricted from radially rotating around respective central axes thereof.

In an embodiment of the liquid cooled connector according to the present disclosure, as illustrated in FIG. 2, the insulation member 41 includes an accommodating cavity 411 having an opening on one side, an inner surface of the accommodating cavity 411 is matched and mounted with an outer surface of an end of the liquid cooling box 31, and an outer surface of the accommodating cavity 411 is matched and mounted with an inner surface of the positioning cavity 21.

Since the accommodating cavity 411 of the insulation member 41 is matched and mounted between the positioning cavity 21 of the terminal 2 and the liquid cooling member 3 (the accommodating cavity 411 may be matched and mounted between the positioning cavity 21 of the terminal 2 and the liquid cooling box 31 of the liquid cooling member 3), the inner surface of the accommodating cavity 411 is closely attached to an outer surface of an end of the liquid cooling member 3, and the outer surface of the accommodating cavity 411 is closely attached to the inner surface of the positioning cavity 21, so that the liquid cooling member 3 is tightly mounted in the positioning cavity 21 of the terminal 2, and the heat generated during charging of the terminal 2 is quickly taken away by the coolant circulating in the liquid cooling member 3, thereby improving the charging efficiency, shortening the charging time and reducing the damage to the connector.

In practical applications, thermally conductive insulation adhesive may be filled at an attachment joint between the inner surface of the accommodating cavity 411 and the outer surface of the end of the liquid cooling member 3, and at an attachment joint between the outer surface of the accommodating cavity 411 and the inner surface of the positioning cavity 21. However, adhesive filling may be omitted when thermally conductive insulation adhesive is not required.

Specifically, as illustrated in FIGS. 1 and 2, the insulation member 41 further includes a blocking portion 42, which extends outwards from an opening end of the accommodating cavity 411 and is attached to an end face where the opening of the positioning cavity 21 is located.

The blocking portion 42 may insulate the adjacent terminals 2, so that different types of terminals 2 can be provided on the same liquid cooling member 3 simultaneously. For example, the terminals 2 at the two ends may be used as a positive terminal and a negative terminal respectively. The blocking portion 42 serves to separate the positive terminal and the negative terminal, preventing electrical connection between them, thereby protecting the connector and the electric apparatus being charged by the connector from damage, and avoiding potential risks such as fire or personal injury.

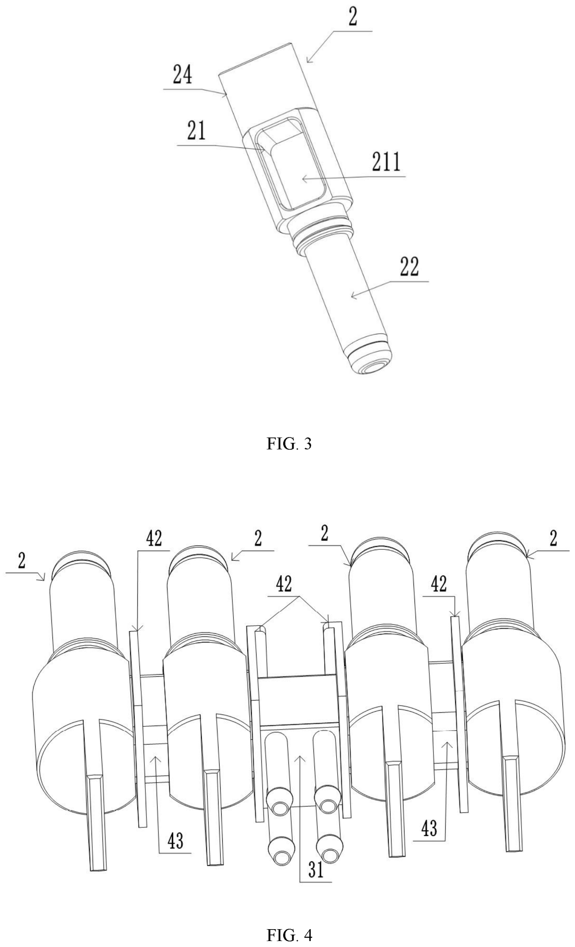

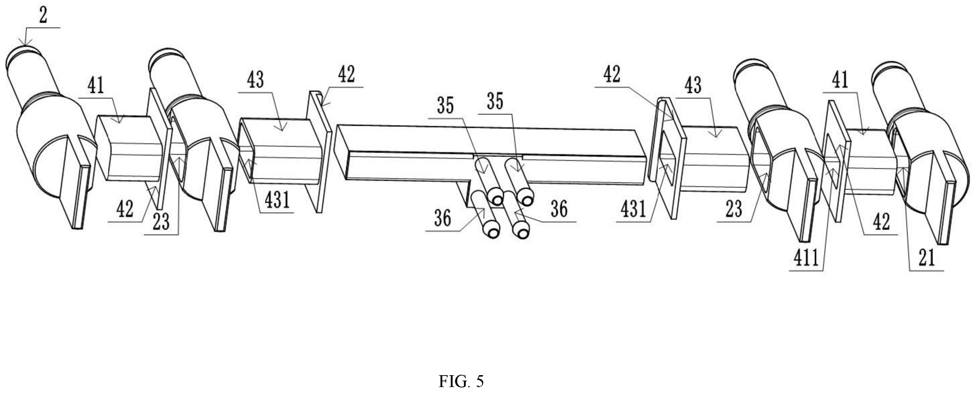

In an embodiment of the liquid cooled connector according to the present disclosure, as illustrated in FIGS. 4 and 5, at least one additional terminal 2 is further provided between the terminals 2 located at the two ends of the liquid cooling box 31, the additional terminal 2 includes a through connection cavity 23, and an additional insulation member 43 is provided between the connection cavity 23 and the liquid cooling box 31.

By arranging the additional insulation member 43, which is different from the insulation member 41, on the liquid cooling member 3, and providing the additional terminal 2 on the additional insulation member 43, the additional terminal 2 is insulated from the terminals 2 at the two ends by the blocking portion 42 of the insulation member 41. The terminals 2 insulated from each other can be connected to different types of wires, that is, the positive terminal connected to a positive wire and the negative terminal connected to a negative wire are insulated from each other. Since the positive wire and the positive terminal connected to the positive wire, as well as the negative wire and the negative terminal connected to the negative wire conduct a large current during charging, they generate heat, and require cooling via connection to the liquid cooling member 3.

Specifically, as illustrated in FIG. 5, the additional insulation member 43 includes a through additional accommodating cavity 431, and at least one opening end of the additional accommodating cavity 431 is provided with a blocking portion 42 extending outwardly, so that at least one o blocking portion 42 is present between adjacent terminals 2.

Since the blocking portion 42 is provided on the additional insulation member 43, the adjacent terminals 2 are insulated from each other and may be connected to the same type of wires. It can be understood that various types of terminals 2 for charging an electric apparatus are defined as a charging device, and a plurality of terminals 2 in the same charging device may be connected to a same positive wire or a same negative wire for use as a positive terminal or a negative terminal. Alternatively, a plurality of terminals 2 are connected to a plurality of positive wires or a plurality of negative wires for use as positive terminals or negative terminals. The problem solved in this way is that when the positive wire or the negative wire has a large diameter, the diameter of the corresponding terminal 2 is also large, and the connector including the positive terminal and the negative terminal is not easy to be disposed in a narrow flat space. At this time, the terminals 2 with relatively small sizes are electrically connected in rows and then connected to the corresponding positive wires or negative wires with large diameters, thereby achieving a flat arrangement of the large-diameter terminals 2, and optimizing the assembly space of the terminals 2. In addition, the large-diameter positive wire is provided to include a plurality of small-diameter wires for use as the positive wire, the large-diameter negative wire is provided to include a plurality of small-diameter wires for use as the negative wire, each of the terminals 2 used as the positive terminals is connected to the corresponding small-diameter wire as the positive wire, and each of the terminals 2 used as the negative terminals is connected to the corresponding small-diameter wire as the negative wire, so that the connection between each of the terminals 2 and the corresponding small-diameter wire is more stable, and it is more suitable for wiring in a flat space.

The terminals 2 provided on the liquid cooling member 3 are insulated from each other, one liquid cooling member 3 may include a plurality of charging devices, and the positive terminal and the negative terminal in a same charging device are provided adjacent to each other. This design enables a single liquid cooled connector to charge a plurality of charging t, a plurality of electric apparatuses, or one electric apparatus including a plurality of charging circuits.

The insulation member 41 and the additional insulation member 43, as well as the adjacent additional insulation members 43, may be bonded together by thermally conductive insulation adhesive. This bonding method prevents relative movement between the insulation member 41 and the additional insulation member 43, which could otherwise lead to contact between the terminal 2 and the liquid cooling member 3. Such contact might result in an electrical connection between the positive terminal and the negative terminal, causing device damage, personal injury, and property loss.

In an embodiment of the liquid cooled connector according to the present disclosure, the liquid cooling box 31 is made of a high thermal conductivity material, and the insulation member 41 is made of a thermally conductive insulation material.

The liquid cooling box 31 is made of a high thermal conductivity material, which may be a high thermal conductivity such as copper or aluminum or copper alloy or aluminum alloy. The liquid cooling box 31 made of the high thermal conductivity material realizes rapid heat exchange between the high-temperature terminal 2 and low-temperature coolant circulating in the liquid cooling box 31, thereby cooling the terminal 2, improving the charging efficiency, shortening the charging time and reducing the damage to the connector.

The thermally conductive insulation material may be thermally conductive insulation silica gel or thermally conductive insulation ceramics. The insulation member 41 made of the thermally conductive insulation material plays a role of heat transfer between the liquid cooling box 31 and the terminal 2, thereby transferring the high temperature of the terminal 2 to the low-temperature coolant, and cooling the terminal 2.

In an embodiment of the liquid cooled connector according to the present disclosure, as illustrated in FIG. 2, the liquid cooling box 31 is provided with at least one liquid inlet 32 and at least one liquid outlet 33.

By arranging the liquid inlets 32 and the liquid outlets 33 on the liquid cooling box 31, circulation of the coolant in the liquid cooling box 31 is realized. This ensures that the liquid cooling box 31 remains at a low temperature, and takes away the high temperature generated during charging of the terminal 2.

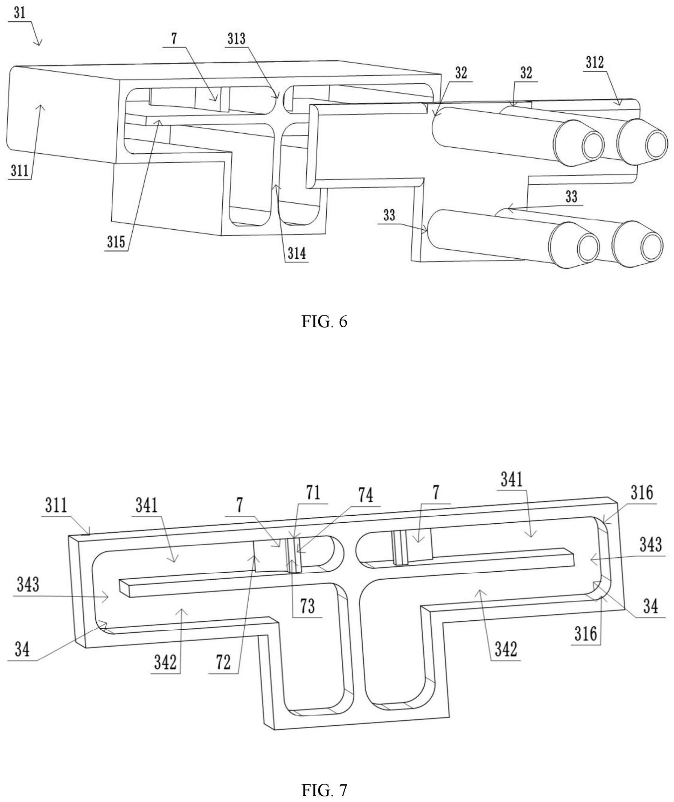

Specifically, as illustrated in FIG. 6, the liquid cooling box 31 includes a liquid storage shell 311 that has an opening on a side facing a cable, and a cover 312 that covers the opening. The liquid inlets 32 and the liquid outlets 33 are provided on the cover 312.

By arranging the liquid inlets 32 and the liquid outlets 33 on the cover 312, the structure of the liquid cooling box 31 is regular, the assembly of the liquid cooled connector is simplified, and the arrangement space of the liquid cooling box 31 in the housing 1 is reduced.

More specifically, the cover 312 is integrally formed with the liquid storage shell 311, or the cover 312 is detachably connected to the liquid storage shell 311.

The connection method between the cover 312 and the liquid storage shell 311 may be set as required. The connection relationship of the integrated structure is more stable. In practice, the cover 312 and the liquid storage shell 311 may be welded or bonded into an integrated structure The detachable connection structure allows for inspection of the internal configuration of the liquid cooling member 3 during assembly. In practice, the detachable connection structure requires a sealing ring to be provided between the cover 312 and the liquid storage shell 311, as well as fasteners such as bolts to ensure secure assembly.

More specifically, the liquid storage shell 311 is internally provided with a cross-shaped partition plate 313, which is located at a center of the liquid cooling box 31 in the arrangement direction to divide the liquid cooling box 31 into two liquid cooling cavities 34 which are mirror images of each other. Each of the liquid cooling cavities 34 includes a first liquid cooling cavity 341, a second liquid cooling cavity 342 and a communication cavity 343 communicating the first liquid cooling cavity 341with the second liquid cooling cavity 342. The first liquid cooling cavity 341 is communicated with one of the liquid inlet 32 and the liquid outlet 33, and the second liquid cooling cavity 342 is communicated with the other of the liquid inlet 32 and the liquid outlet 33.

A vertical plate 314 of the cross-shaped partition plate 313 is located at a center of the liquid cooling box 31 in the arrangement direction, that is, a plane where the vertical plate 314 is located is a center plane of the liquid cooling member 3. The vertical plate 314 divides the liquid cooling box 31 into two liquid cooling cavities 34 which are mirror images of each other with respect to the center plane, and each of the liquid cooling cavities 34 is an independent cooling liquid circulation system to realize heat exchange between the terminal 2 and the liquid cooling member 3.

A transverse plate 315 of the cross-shaped partition plate 313 is provided to be intersected with the vertical plate 314, exemplarily perpendicular to the vertical plate 314. Two ends of the transverse plate 315 are not in contact with inner walls of two ends of the liquid cooling box 31 in the arrangement direction of the terminals 2, so as to form the communication cavity 343. Two sidewalls of the transverse plate 315 in an extension direction of the terminals 2 are respectively connected to an inner wall of the cover 312 and a sidewall of the liquid storage shell 311 opposite to the cover 312, thereby forming a first liquid cooling cavity 341 and a second liquid cooling cavity 342 in each of the liquid cooling cavities 34 which are communicated through the communication cavity 343. The liquid inlet 32 is provided at a position on the first liquid cooling cavity 341 close to the vertical plate 314, and the coolant enters the first liquid cooling cavity 341 through the liquid inlet 32 and then flows towards the inner wall of the end located at the same side. Next, the coolant enters the second liquid cooling cavity 342 via the communication cavity 343, and then flows out of the liquid cooling member through the liquid outlet 33.

Through the cross-shaped partition plate 313, the liquid cooling box 31 enables the coolant to circulate in the whole space inside the liquid cooling box 31, so that the heat generated by the positive terminal and the negative terminal provided on the liquid cooling member 3 can be dissipated in time, thereby reducing the temperature of the terminal 2 during operation, improving the charging efficiency and shortening the charging time.

A connection area inner surface 316 between an end sidewall of the liquid cooling box 31 and a circumferential sidewall of the liquid cooling box 31 may be rounded or rightangled.

More specifically, as illustrated in FIG. 6, the first liquid cooling cavities 341 are communicated with the liquid inlets 32, and each of the first liquid cooling cavities 341 is provided with an arc-shaped plate 7 (arc-shaped guide plate) extending along an extension direction of the terminal 2. A gap is formed between the arc-shaped plate 7 and an inner surface of the cover 312, and a gap is formed between the arc-shaped plate 7 and a sidewall of the liquid storage shell 311 opposite to the cover 312.

The arc-shaped plate 7 divides the first liquid cooling cavity 341, which is communicated with the liquid inlet 32 into a diversion area 3411 located upstream of the arc-shaped plate 7, a confluence area 3412 located downstream of the arc-shaped plate 7, and an inner liquid flow area 3413 and an outer liquid flow area 3414 respectively located at two sides of the arc-shaped plate 7. The coolant flowing into the first liquid cooling cavity 341 is diverted by the arc-shaped plate 7, so as to reduce the impact of the inflow of the coolant on the sidewall of the liquid storage shell 311 opposite to the cover 312. The coolant circulating in the outer liquid flow area 3414 is guided by the arc-shaped plate 7 along its arc part towards the communication cavity 343, and then t flows into the second liquid cooling cavity 342 through the communication cavity 343, so that the coolant flows through the whole liquid cooling cavity 34, and the heat generated by the terminal 2 connected to the liquid cooling member 3 during charging is taken away in time.

More specifically, as illustrated in FIGS. 6 to 8, the arc-shaped plate 7 includes a first end 71 and a second end 72 opposite to the first end 71, and the first end 71 is closer to the center than the second end 72.

The first end 71 is aligned with the liquid inlet 32 to divert the coolant flowing in through the liquid inlet 32 into the inner liquid flow area 3413 and the outer liquid flow area 3414 on both sides of the arc-shaped plate 7. The projection of the first end 71 on the cover 312 bisects the flow cross-section of the liquid inlet 32 on the cover 312 (optionally).

More specifically, the first end 71 includes a first guide surface 73 and a second guide surface 74, which are opposite to each other and intersect at a tip of the first end 71.

The first guide surface 73 and the second guide surface 74 divert the coolant flowing in through the liquid inlet 32 into the inner liquid flow area 3413 and the outer liquid flow area 3414, thereby reducing the impact of the coolant on the first end 71. The contour line of the first end 71 is parallel to the vertical plate 314 and perpendicular to the transverse plate 315. The projection line of the contour line of the first end 71 onto the liquid inlet 32 coincides with the center line of the liquid inlet 32 in the arrangement direction of the terminals 2. In this case, when the liquid inlet 32 has a shape that is symmetrical about the center line, the first end 71 enables the coolant flowing in via the liquid inlet 32 to evenly flow into the inner liquid flow area 3413 and the outer liquid flow area 3414.

In an embodiment of the liquid cooled connector according to the present disclosure, as illustrated in FIGS. 1 and 2, the liquid cooled connector further includes a liquid leakage detection device 8 disposed in a detection control loop. The liquid leakage detection device 8 includes two conductive elements 81 located below the liquid cooling member 3, with a gap 82 formed between the two conductive elements 81. When liquid leaks from the liquid cooling member 3, the gap 82 is filled with the liquid to switch the detection control loop from an open state to a closed state to trigger the liquid leakage detection device 8 to transmit a leakage signal.

The liquid leakage detection device 8 is provided in the liquid cooled connector to detect damage of the liquid cooling member 3, and prevent the positive terminal and the negative terminal from being electrically connected. This protects both the connector and the electric apparatus being charged by the connector, while also avoiding fires and personal injury.

Specifically, the two conductive elements 81 are configured as two arc-shaped plates symmetrically arranged with respect to the gap 82, and the two arc-shaped plates enclose a liquid receiving area (i.e., an area that receives the coolant leaked from the liquid cooling member), with the gap 82 being located at a lowest part of the liquid receiving area.

As illustrated in FIG. 5, the liquid cooling member 3 further includes a liquid inlet pipe 35 communicated with the liquid inlet 32 and a liquid outlet pipe 36 communicated with the liquid outlet 33, and the liquid receiving area shields the whole liquid cooling member 3 from below, so that the liquid cooling member 3 can be completely projected onto the liquid receiving area. Therefore, any coolant leakage occurring at any location of the liquid cooling member 3 can be captured by the liquid receiving area. Since the liquid receiving area is formed by the two arc-shaped plates and the gap 82 is located at the lowest part of the liquid receiving area, the liquid dripping into the liquid receiving area will slide down to the gap 82 at the lowest part. This causes the detection control loop to be switched from the open state to the closed state, thereby triggering the control device in the detection control loop to transmit a leakage signal. The control device may send warning information to a prompting device according to the leakage signal to remind the user. The warning information may include, but is not limited to, sound, light, and text information.

Although some specific embodiments of the present disclosure have been described in detail through examples, those skilled in the art should understand that the above examples are only for illustration and are not intended to limit the scope of the present disclosure. It should be understood by those skilled in the art that the above embodiments can be modified without departing from the scope and the spirit of the present disclosure, and the scope of the present disclosure is defined by the appended claims.

## Claims

1. A liquid cooled connector, comprising a housing, at least two terminals disposed side by side in the housing, a liquid cooling member provided between the two terminals, and an insulation member provided between each terminal and the liquid cooling member;
wherein the liquid cooling member comprises a liquid cooling box extending along an arrangement direction of the terminals, and the terminals located at two ends of the liquid cooling box are each provided with a positioning cavity having an opening on one side; and the two ends of the liquid cooling box are respectively inserted into the positioning cavities and abutted against bottom walls of the positioning cavities opposite to the openings so as to be fixed.

2. The liquid cooled connector according to claim 1, wherein each of the insulation members comprises an accommodating cavity having an opening on one side, an inner surface of the accommodating cavity is matched and mounted with an outer surface of an end of the liquid cooling box, and an outer surface of the accommodating cavity is matched and mounted with an inner surface of the positioning cavity.

3. The liquid cooled connector according to claim 2, wherein the insulation member further comprises a blocking portion, which extends outwards from an opening end of the accommodating cavity and is attached to an end face where the opening of the positioning cavity is located.

4. The liquid cooled connector according to claim 1, wherein at least one additional terminal is further provided between the terminals located at the two ends of the liquid cooling box, the additional terminal comprises a through connection cavity, and an additional insulation member is provided between the connection cavity and the liquid cooling box.

5. The liquid cooled connector according to claim 4, wherein the additional insulation member comprises a through additional accommodating cavity, and at least one opening end of the additional accommodating cavity is provided with a blocking portion extending outwardly, so that at least one blocking portion is present between adjacent terminals.

6. The liquid cooled connector according to claim 1, wherein the liquid cooling box is made of a high thermal conductivity material, and the insulation member is made of a thermally conductive insulation material.

7. The liquid cooled connector according to claim 1, wherein the liquid cooling box is provided with at least one liquid inlet and at least one liquid outlet.

8. The liquid cooled connector according to claim 7, wherein the liquid cooling box comprises a liquid storage shell that has an opening on a side facing a cable, and a cover that covers the opening, wherein the liquid inlet and the liquid outlet are provided on the cover.

9. The liquid cooled connector according to claim 8, wherein the cover is integrally formed with the liquid storage shell, or the cover is detachably connected to the liquid storage shell.

10. The liquid cooled connector according to claim 8, wherein the liquid storage shell is internally provided with a cross-shaped partition plate, which is located at a center of the liquid cooling box in the arrangement direction to divide the liquid cooling box into two liquid cooling cavities which are mirror images of each other, and each of the liquid cooling cavities comprises a first liquid cooling cavity, a second liquid cooling cavity and a communication cavity communicating the first liquid cooling cavity with the second liquid cooling cavity; and the first liquid cooling cavity is communicated with one of the liquid inlet and the liquid outlet, and the second liquid cooling cavity is communicated with the other of the liquid inlet and the liquid outlet.

11. The liquid cooled connector according to claim 10, wherein the first liquid cooling cavities are communicated with the liquid inlets, and each of the first liquid cooling cavities is provided with an arc-shaped guide plate extending along an extension direction of the terminal; and
a gap is formed between the arc-shaped guide plate and an inner surface of the cover, and a gap is formed between the arc-shaped guide plate and a sidewall of the liquid storage shell opposite to the cover.

12. The liquid cooled connector according to claim 11, wherein the arc-shaped guide plate comprises a first end and a second end opposite to the first end, and the first end is closer to the center than the second end.

13. The liquid cooled connector according to claim 12, wherein the first end comprises a first guide surface and a second guide surface, which are opposite to each other and intersect at a tip of the first end.

14. The liquid cooled connector according to claim 1, further comprising a liquid leakage detection device disposed in a detection control loop;
the liquid leakage detection device comprises two conductive elements located below the liquid cooling member, with a gap formed between the two conductive elements; and
when liquid leaks from the liquid cooling member, the gap is filled with the liquid to switch the detection control loop from an open state to a closed state to trigger the liquid leakage detection device to transmit a leakage signal.

15. The liquid cooled connector according to claim 14, wherein the two conductive elements are configured as two arc-shaped plates symmetrically arranged with respect to the gap, and the two arc-shaped plates enclose a liquid receiving area, with the gap being located at a lowest part of the liquid receiving area.
